# EUROPEAN PATENT SPECIFICATION

(11) **EP 4 330 464 B1**
(45) Date of publication and mention of the grant of the patent: **09.09.2026**
(21) Application number: 22722651.1
(22) Date of filing: 25.04.2022
(51) Int. Cl.: E02D 17/20, B09B 1/00

(54) **TUFTED GEOTEXTILE WITH UNDERSTORY FOR SHEAR RESISTANCE TO HYDRAULIC AND DRY-FLOW INFILL DISPLACEMENT**
TUFTING-GEOTEXTIL MIT UNTERGESCHOSS FÜR SCHERBESTÄNDIGKEIT GEGEN HYDRAULISCHE UND TROCKENFLUSSFÜLLUNGSVERLAGERUNG
GÉOTEXTILE TOUFFETÉ AVEC SOUS-ÉTAGE POUR UNE RÉSISTANCE AU CISAILLEMENT À UN DÉPLACEMENT DE REMPLISSAGE HYDRAULIQUE ET À ÉCOULEMENT SEC

(30) Priority: 25.04.2021 US 202163179537 P; 14.05.2021 US 202163188814 P
(43) Date of publication of application: 06.03.2024
(73) Proprietor: Watershed Geosynthetics LLC, Alpharetta, GA 30009 (US)
(72) Inventor: LEWIS, William Delaney, West Monroe, Louisiana 71292 (US); DAVIS, Carl M., III, Canton, Georgia 30114 (US)
(74) Representative: Reddie & Grose LLP
(86) International application number: PCT/US2022/026121
(87) International publication number: WO 2022/232013

(56) References cited:
- EP-A1- 0 678 622
- EP-A1- 1 705 292
- WO-A1-2006/075241
- US-A1- 2020 071 887

## Description

### Technical Field

The present invention relates to tufted geotextile sheets for land site covers and closure systems. More particularly, the present invention relates to tufted geotextile sheets having shear resistance against infill displacement from hydraulic and dry-flow shear forces with backings tufted with alternating first tufts defining a tuft extent and second tufts defining an understory for infill stabilization and resistance to displacement of infill received in the interstices among the tufts.

In this application, the following terms will be understood to have the indicated definitions:
waste sites - -refers to earthen berms and to sites where waste is deposited, such as landfills, phosphogypsum stacks, environmentally impacted land, leach pads, mining spoils and environmental closures or material stockpiles that require a closure or cover system;
synthetic grass - -refers to a composite of at least one geotextile (woven or nonwoven) tufted or knitted with one or more synthetic yarns or strands that has the appearance of grass;
geomembrane - -refers to a conventional structured or textured polymeric material, such as high-density polyethylene, very low-density polyethylene, linear low-density polyethylene, polyvinyl chloride, etc, provided as an impermeable sheet for liner purposes in the waste site and land site industry.

### Background Of The Invention

Large area land sites occupied for use as waste sites, landfills, stockpiles, and power plant disposal fields remain open typically for a number of years for receiving waste materials, mining spoils or power plant wastes and ash, landfill trash and municipal solids and liquids wastes. Waste sites typically have steep slopes rising from a toe or base to an upper elevated apex or peak. The elevation over time with deposits of fill materials may typically reach several hundred feet above the toe. While steep slopes allow increased storage volume, steep slopes experience significantly high shear forces. These forces occur in response to the fill materials loaded in within a vertical portion of the area allocated for the landfill and also arise from precipitation and water flow such as from rain fall on the waste site that generates high volumes of water flowing downwardly to the toe. Steep slopes often experience large and rapid run-off. Upon reaching an appropriate capacity for the particular site, the site is closed to receiving additional waste materials. In the interim, however, filled portions of large area land sites may gainfully use a covering to reduce or, with an impermeable component in a covering system to block, water inflow into the land site and to reduce disturbances of the in-fill materials pending closure. Some such temporary coverings may require ten or more years expected longevity. Such covering may also be gainfully applied for long term final covering systems.

The structure of landfills and waste sites are subject to environmental regulations for construction, operation, and closing after design capacity is reached. Construction regulations routinely require lining of a base of landfill with an impermeable geomembrane liner. The liner restricts flow of water and contaminates from the fill material and precipitation into ground water below the landfill. Rather, water is channeled to a treatment facility prior to discharge. The geomembrane however may slip or move in response to shear forces, and slippage may cause damage to the geomembrane as well as site failure and avalanche-type sliding collapse of the fill material. Such failure and damage incur significant cost to remedy particular if the failure causes openings in the liner which then must be replaced in order to maintain impermeability.

Land site filling operations typically involve depositing waste materials in specific laydown areas. The deposited waste materials are often covered with a soil layer to form a cell. Adjacent cells are formed with subsequently deposited waste materials. Closure of the site upon reaching design capacity involves overlaying a covering of sealing materials on exposed surfaces of the landfill. Notwithstanding closure, the land sites have ongoing costs including monitoring for leaching of wastes and contaminates into water systems and streams, collection, and discharge of gases from the waste site, and periodic maintenance to maintain the closure covering. Previous efforts to close such sites involved overlaying the site with an earthen soil layer. High water flow, however, erodes soil covering, and vegetation providing resistance to erosion, requires cutting and growth control. Further, high water flow may require installation of benches around the perimeter of the side spaced, for example, typically at 30.5 meters (100 feet) to 45.7 meters (150 feet) intervals, to minimize soil erosion. The benches are substantially leveled broad interruptions or steps in the slope and extend along a contour. The bench typically includes a guttering system, or down chutes, for receiving water flow from the slope and channel the water to a catch basin for storage, treatment if any, and discharge to a water system or waterway. The bench may also provide a roadway for vehicles to move along the sloped ground.

In recent years, large area sites are closed with covering formed with elongated sheets of an impermeable geomembrane. The geomembrane seals the site from inflow of wind and water such as from rain and snow, and thereby prevents wastes and contaminates from infiltration into streams and ground water. The membranes often must be secured with anchors and trench systems to resist wind uplift. However, it is disfavored to use anchors that pierce the geomembrane to prevent openings that may allow water flow into the underlying fill materials in the waste site.

To provide aesthetics and water flow control, tufted geotextiles have been overlaid on exposed membranes. Our prior U.S. Patent No. 8,403,597 discloses a cover system for waste sites effective in resisting wind uplift and remaining in-place with frictional contact between the geomembrane and the geotextile. The tufted geotextile provides a field of synthetic grasses with short blades extending from the geotextile backing sheet. In such installations, granular material infill may fill interstices of the tufts. The granular material assists with loading to resist wind uplift, filters water flowing through the geotextile into a synthetic drainage on the geomembrane, and assisting with reducing exposure of the geotextile to UV and deterioration. Further, US 2020/071887 A discloses a tufted geotextile for covering waste sites, where rows of tufts of two different lengths are provided. A granular infill is placed up to the length of the shorter tuft blades. Finally, EP 0678622 A relates to an artificial turf for sports grounds also with rows of tufts of different lengths, the shorter assist tufts being covered by the infill and preventing its solidification.

While meeting closure system needs in the industry, there are opportunities for reduced costs in materials and maintenance while increasing longevity of the installed cover. The water flow creates hydraulic shear loading and may cause the granular infill material to be displaced and move, and thus require periodic maintenance to replace infill in areas that the infill has thinned. There are alternatives that reduce infill movement (i.e., increase infill shear resistance). While these have benefits as to maintenance for installed systems, increased tuft gauge and reduced tuft blade lengths have the countering drawbacks of reduced friction resistance of the tufted geotextile and geomembrane that restricts applications to less steeply sloped installations.

Further, the changes increase UV exposure and lead to degradation of the backing sheet of the tufted geotextile covering, and thus reduce the operational life for a tufted geotextile cover or a closure system for waste sites.

The need for benches also incurs installation and maintenance costs. The cover systems also typically involve the use of motor vehicles over the installed cover system for inspection and maintenance purposes. The overlaid tufted geotextile / geomembrane system thus preferably accommodates use of motor vehicles while resisting cutting and trenching and damaging the frictional interface that retains the geotextile overlaid on slopes of the covered landfill.

Accordingly, there is a need in the art for a tufted geotextile having shear resistance against hydraulic and dry flow infill displacement for stabilizing the infill from displacement. It is to such that the present invention is directed.

### Summary Of The Invention

The invention is defined by the appended claims.

The present invention meets the need in the art by providing a tufted geotextile for use with covering and closing waste sites and land surfaces. In an aspect, the present invention provides such a tufted geotextile defined by claim 1.

The tufted geotextile readily overlies a ground surface for covering purposes as well as installs as a component in a closure system having a geomembrane for restricting inflow of ambient water into the covered ground.

The continuous filament yarn and ply yarn tuft on a spacing gauge in a range of about 65.6 tufts per meter (20 tufts per foot) to about 164.0 tufts per meter (50 tufts per foot) and lines spaced about 0.64 cm (1/4 inch) apart to 1.91 cm (¾ inch) apart.

The continuous filament yarn comprises a filament yarn made of one or more continuous strands.

The ply yarn comprises a plurality of staple fiber yarns twisted together. The strands of staple yarns are threadlike elongate fibers having a high length-to-diameter ratio and perimeter portions extend as slender thread-like filaments.

In another aspect, the present invention provides a method for tufting a geotextile for an understory of nest-ended tufts in a tufted geotextile for use with covering and closing waste sites and land surfaces defined by claim 8.

Further, the method for tufting a geotextile, with attaching a geomembrane to a bottom surface of the backing sheet for restricting inflow of ambient water into the ground covered by the tufted geotextile.

Further, the method for tufting a geotextile, wherein the first yarns and the second yarns tuft on a spacing gauge in a range of about 65.6 tufts per meter (20 tufts per foot) to about 164.0 tufts per meter (50 tufts per foot).

Further, the method for tufting a geotextile, wherein the lines of first tufts and the lines of second tufts are spaced about 0.64 cm (1/4 inch) apart to 1.91 cm (¾ inch) apart.

Further, the method for tufting a geotextile, forming said nests of the one or more strands of staple fiber yarns comprises the distal end fraying into discrete fibers that splay laterally into the interstices.

Further, the method for tufting a geotextile, wherein the second yarns are held during formation of the in-tuft process second tufts for elongating said second yarns prior to cutting.

In another aspect, the present invention provides a method of covering outdoor land sites for increased resistance to high shear events defined by claim 14.

Further, the method of covering outdoor land sites, wherein the continuous filament yarn comprises a filament yarn and said ply yarn comprises a plurality of strands of staple fiber yarns twisted together.

Further, the method of covering outdoor land sites, overlaying the land site with a geomembrane to restrict inflow of ambient water into the ground through the ground cover.

Objects, advantages, and features of the present invention will become readily apparent upon a reading of the following detailed description in reference to the drawings.

### Brief Description Of The Drawings

Fig. 1 illustrates in perspective view a side view of a tufted geotextile in accordance with the present invention.
Fig. 2 illustrates in top plan view a portion of a tufted textile illustrated in Fig. 1.
Fig. 3 illustrates an elevational view of the tufted geotextile illustrated in Fig. 1 during a tufting process.
Fig. 4 illustrates an elevation view of the tufted geotextile illustrated in Fig. 1 during a tufting process.
Fig. 5 illustrates in exploded view a tufted geotextile illustrated in Fig. 1 overlaid on a geomembrane for covering a ground surface.

### Detailed Description

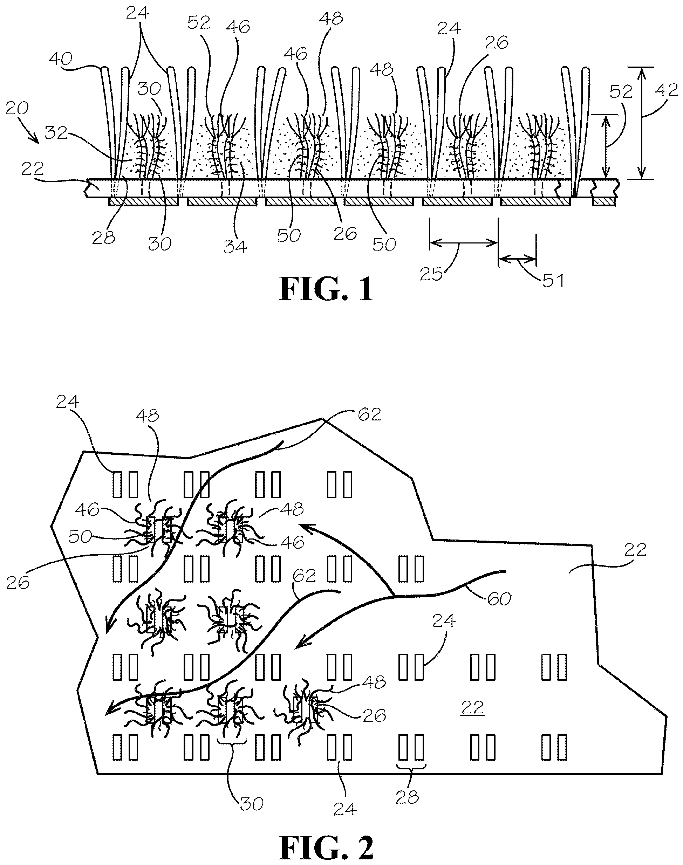

With reference to the drawings, in which like parts have like identifiers, Fig. 1 illustrates in side elevational view a tufted geotextile 20 in accordance with the present invention. The tufted geotextile 20 comprises at least one backing sheet 22 tufted with a first yarn for a plurality of first tufts 24 and a second yarn for a plurality of second tufts 26. The first tufts 24 are spaced-apart on a spacing gauge 25 for a first row 28 and the second tufts 26 are spaced-apart on the gauge in an adjacent second row 30, the first row and the second row alternating in the tufted backing sheet 22 for a selected longitudinal length. The spaced-apart first tufts 24 and second tufts 26 define interstices 32 therebetween for receiving an infill 34. The first tufts 24 extend a first length from the backing sheet 22 as simulated grass blades to a free distal extent 40 defining a tuft height 42 for the tufted geotextile. Each of the second tufts 26 have a plurality of filaments or threads 46 extending as a nest generally 48 proximate an upper end portion as well as threads 50 extending bristly outwardly from the tuft along its longitudinal length. Generally, the filaments or threads 46 extending outwardly proximate the upper extent of the tuft define the nest 48 as an understory collection of the threads that occupy portions of the proximate interstices 43 lower than the height 42 of the first tufts 24. An upper extent 52 of the nested tuft 26 has a second height relative to the backing sheet to define an understory, which second height is less than the first height.

The plurality of projecting discrete threadlike elongate filaments 46 and 50 extending outwardly from the second tuft into the proximate interstices 32 as a space-occupying members of the nest 48. The nest 48 of the discrete filaments 46, 50 restrictingly occupy portions of the interstices 32 and narrow an effective gap 51 between the tufts 24, 26. With the gauge 25 of 1.27 cm (½ inch) for the rows 28 and for the rows 30, the row 30 is positioned 0.64 cm (¼ inch) from the adjacent rows 28. The narrowed gap 51 at least partially occupied with the bristly nest 48 and filaments 46, 50 restricts displacement of the infill 34 laterally in the interstices through the tufted geosynthetic in response to loading forces such as hydraulic flow from ambient water or wind blowing over the tufted geotextile. A portion of the tufted geosynthetic is illustrated in top plan view in Fig.2. The interstices 32 form water flow passages 60 through the and about the tufts 24, 26. The water may flow at high velocities due to placement of the tufted geotextile 20 for ground covering purposed on sloping ground. High shear forces on the tufted geotextile 20 cause the infill to displace, such as dry flow of the infill under wind force loading or flow with water velocity moving across the tufted geosynthetic. The nest 48 of extending fibers or filaments 46, 50 creates diverters, impediments, and blocks in the water flow passages 60. The fibers or filaments 46, 50 are restricted to the occupying presence in the interstices 32 proximate the respective originating tuft 24 which secures in engagement to the backing sheet 22. The diversion of the occupying fibers or filaments 46, 50 in the interstices blocks and restricts displacement flow of infill and slow the movement-inducing ambient water or wind flow thorough the tufts 24, 26 of the tufted geomembrane 20. The water flow passages become serpentine 62 rather than forcibly direct.

The first yarn 24 and the second yarn 26 are of different types. The yarns are selected for the differing structural requirements for the tufted geosynthetic 20 in accordance with the present invention for simulated grass blades and for the intertangled nest 48 as the understory. The first yarn 24 comprises a continuous filament yarn, preferably flat, alternatively slit, but may be textured for simulating grass blades, and made from polyethylene, polypropylene, or other suitable polymer. The second yarn comprises a thatched or spun yarn that, while continuous for tufting purposes, forms of a plurality of discrete staple fibers twisted together as a bulk yarn, twisted yarn, or thatched yarn. The staple fibers are discontinuous and of differing lengths. Longitudinal perimeter portions of the twisted yarn may exhibit the distal ends of the staple fibers extending outwardly as short stubby or bristly threads. The staple fibers preferably have a resiliency or elasticity for returning to a relaxed relation if the strand is stretched or extended.

The infill 34 may be a sand material, and further particularly may comprise a fire-retardant additive or product independent of a sand carrier mixture, such as a non-halogenated magnesium hydroxide powder, silicates including potassium silicate, calcium silicate, and sodium silicate, or other in situ fire suppression or resistant material.

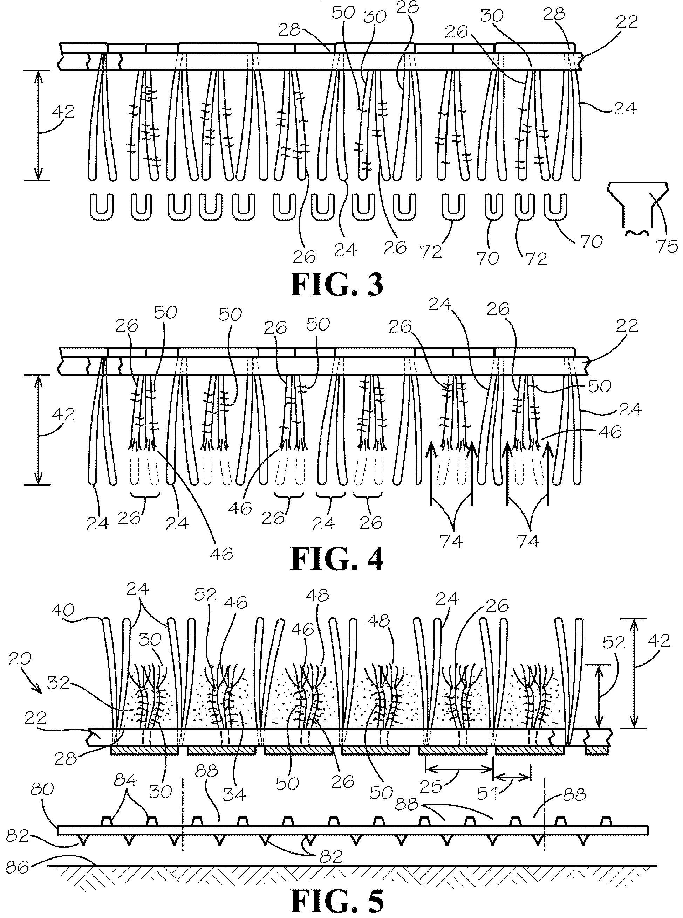

Fig. 3 illustrates the backing sheet 22, first yarns for the first tufts 24, and second yarns for the second tufts 26 in the adjacent row, in the tufting process in which the backing 22 passes through a needle punching station (not illustrated) for alternating tufting of the first row 28 of tufts 24 and second row 30 of tufts 26. The tufting may be accomplished for the first row 28 and second row 30 simultaneously, or with separate spaced needle stations. A plurality of needles forms the first row 28 and each carries a first yarn 24. The needles insert through the backing 22 carrying the respective yarn a predetermined distance to form an in-tuft process tuft and then retract. Each needle forms a loop 70 that is cut with a cutter 75 to the tuft height 42 and results in a tuft of a pair of elongate members extending from the surface of the backing sheet 22 as simulated blades of grass with interstices 32 among adjacent tufts.

A second set of needles carry a respective second yarn and similarly insert through the backing 22 in the adjacent row 30 the predetermined distance to form an in-tuft process tuft and retract leaving a loop 72 that is cut with the cutter 75 to the tuft height 42. As shown in the further process in Fig. 4, the cut portions of the second yarn forming the tuft 26 then elastically retract towards the backing 22 as shown by arrows 74, and the discrete fibers in the second yarn begin to untwist and fray or ravel apart and splay outwardly and extend apart into the proximate interstices 32 as the nest 48. (The just-cut, pre-retraction position of the members of the tuft 26 are shown in broken line for illustrative purposes.) This retraction and untwisting forms a nesting of the intertangled staple fibers as the nest 48 intermediate the distal extent of the first tufts 26 and the backing 22.

The second yarn may be tufted of equal or less length than the first yarn in the backing sheet 22, as discussed above. In the illustrated embodiment, the tufts 24 and 26 are needle punched the same distance for forming the in-tuft process tuft of the loops 70, 72 for cutting to form the tufts. In such embodiment, the elasticity of the second yarn, or the retention stop and elongated stretching, retracts the cut second yarn to the second height. The tufting machine thereby tufts the rows 28, 30 to the same height, but the properties of the second yarn cause the retraction or crinkle-down to the second height that is less than the parent or in-tuft process state during needle punching of the yarn to the full extent for looping during retraction of the needle. In an alternate embodiment, the second yarn tufts to the second height that is a percentage less that the height tufted with the first yarn. The characteristics of the second yarn in an embodiment enable the retracting or crinkling-down upon cutting the loop 72 to a height that is majority percentage of but less than the first height of the tufts 24 of the first yarn.

In an alternate process, the supply of the second yarns stops or is held with the needle intermediate the insertion. The infeed supply of the second yarn passes through a brake device on the tufting machine. The brake device operates to move between a first position and a second position. In the first position, the second yarn passes unimpeded into the punching station. In the second position, the brake device stops, or in an alternate embodiment slows, the travel of the second yarn. The device for each second yarn causes the second yarns to elastically elongate or stretch as the in-tuft process as the needle reaches the predetermined extent during punching. As the needles retract, the cutter 75 cuts the loops 72 of the in-tuft process extended second yarns and forms the opposing pair of members of the tuft 26. The cutting releases the opposing members to elastically rebound 74 towards the backing 22 with the untwisting and splaying of the staple fibers of the second yarn into the proximate interstices 32 and forming the nest 48. (The just-cut, pre-retraction position of the members of the tuft 28 are shown in broken line for illustrative purposes.) The holding of the second yarns 26 causes the carried portion to elongate subject to a tensile strength of the second yarn, which further induces the retracting and untwisting of the released staple fibers after cutting the loop 72.

In an alternate embodiment, a tufting machine is configured with first and second spaced-apart needle punching stations. The tufting machine receives the backing 22. The tufting machine tufts the backing sequentially from short height to taller height. The illustrative embodiment discloses the tufted geotextile 20 with tufts 26 of the first height and the tufts 26 of the second height for the understory. The first tufting station tufts the second type of tufts 26 in the row 30 and during the needle retraction or thereafter a cutter cuts the loops 72 in the second yarn at the lower second height. The tufting machine advances the backing 22 to position an intermediate portion of the backing relative to the second needle punching station. The second tufting station tufts the first tufts 24 in the row 28. Then, conventionally during the needle retraction or thereafter a second cutter cuts the loops 70 in the first yarn at the taller first height.

In an alternate embodiment, the tufting machine during tufting of the second yarn punches the needles a greater distance than the distance for the needles of the first yarns. Upon cutting the loop 72 of the second yarn to form the tufts 26, the elongated members of the yarn retract to a understory second height less than the first height of the tufts 24 tufted with the first yarn. In this embodiment, the tufting machine is configured with first and second spaced-apart needle punching stations for tufting the backing sequentially from short height to taller height. The first tufting station tufts the first yarn for the first type of tufts 24 in the row 28. The second tufting station tufts the second yarn for the second type of tufts 26 in the row 30. During the needle retraction or thereafter a cutter cuts the loops 72 in the second yarn at the extended height, and the members cut from the looped second yarn retract to the lower second height and form the bristled understory in the interstices 32.

The tufted geotextile 20 is used for covering surfaces of large outdoor ground sites such as landfills. The tufted geotextile 20 may be supplied in rolls and positioned on and unrolled over the ground. Another elongated panel of the tufted geotextile may be placed adjacent the first, and others similarly installed for ground covering purposes at the site. Infill 34 is distributed over the tufted geotextile 20. The interstices 32 receive the infill. The understory of the nests 48 extending from the second tufts 26 occupy intermediate portions of the proximate interstices. The interstices 32 receive the infill in and around the tufts 24, 26 and through and about the nests 48. Some infill abuts the fibers and threads extending from the understory bristled tufts 26. The nests 48 and the stubby threads 50 extending outwardly along the longitudinal length of the tufts 26 effect a reduction in the spacing or gap between adjacent tufts 24, 26 and creates diverting or blocking structure as to the infill. During high shear events such as water from ambient precipitation flows in passages 60 over and through the geotextile, and the nest 48 and threads 50 divert and block rapid flow into a slower serpentine flow 62, resisting displacement of the infill. The nests 48 and the threads 50 similarly resist infill displacement during high shear wind events.

In another use as illustrated in Fig. 5, the tufted geotextile 20 installs on a geomembrane sheet 80, that is preferably textured or structured, but may be smooth. A textured geomembrane sheet may have a pattern of grooves formed therein. Fig. 5 illustrates a structured geomembrane from which spikes 82 project from a bottom surface and posts or stubs 84 project from an opposing upper surface. A structured membrane may have only the projecting spikes 82 or only the projecting stubs 84, with the opposing surface smooth or textured. The spikes 82 in the illustrated embodiment mechanically engage a ground surface 86. The stubs 84 engage a bottom surface of the tufted geotextile 20. The stubs 84 define a gap 88 therebetween to define water flow channels along which ambient water the passes through the tufted geotextile 20 flows off of a covered ground.

The geomembrane 80 comprises an elongate impermeable sheet for restricting water inflow into the ground. In another embodiment, the tufted geotextile 20 attaches to the geomembrane as a unitary assembly, such as an adhesive, heat melt bonding at spaced bonds, or mechanical joinder. The nests 48 and the stubby threads 50 extending outwardly along the longitudinal length of the tufts 26 effect a reduction in the spacing or gap between adjacent tufts 24, 26 and creates diverting or blocking structure as to the infill. During high shear events such as water from ambient precipitation flows in passages 60 over and through the geotextile, and the nest 48 and threads 50 divert and block rapid flow into a slower serpentine flow 62, resisting displacement of the infill. The nests 48 and the threads 50 similarly resist infill displacement during high shear wind events. The geomembrane restricts inflow of ambient water downwardly into the ground; rather the ambient water flows over the tufted geotextile to drainage systems such as culverts, gutters, and drainage flow paths off of the covered ground.

In the illustrated embodiment, the backing 22 is an elongated sheet woven with warp and waft yarns, although in an alternate embodiment a nonwoven sheet may be used. The backing sheet 22 has a weight basis or mass of between about 2 ounces per square yard to about 40 ounces per square yard. The backing sheet 22 forms of a polymer material that resists exposure to sunlight that generates heat rise in the geotextile 20 and that resists ultraviolet (UV) radiation in the sunlight that degrades the backing sheet and the tufted blades. Useful UV resistant additives include HALS and carbon black. The polymers are selected to provide high shear strength resistance. The backing 22 has strong tensile strength, in a range of about 1,191 kilogram per meter (800 pounds per foot) to about 5,953 kilogram per meter (4,000 pounds per foot).

The tufted geotextile 20 may comprise one or more backing sheets 22. The backing sheet 22 comprises accordingly a first backing sheet and a second backing sheet in overlying relation. The first backing sheet and a second backing sheet may be connected, such as with tacking points or may be independently separate. The tufting yarns interweave through the backing sheets to secure the backing sheets closely together with the spaced-apart rows 28, 30 of first and second yarns, which first yarns extend from the geotextile sheet 20 as the grass-like tufts 24 of simulated blades with the second yarns extending the understory tufts 26 defining the nest 48 occupying the interstices 32. Embodiments having the two or more backing sheets 22 tufted together provides increased slippage resistance of increased friction, for example, resistance strength for use in severely steep side slopes, and provides as the uppermost backing sheet a waste layer for initial UV exposure and degradation during the operational life of the tufted geotextile 20 while protecting the lower second backing sheet. The two, or more, layers of backing sheets 30, 32 tufted together affords improved dimensional stability having an increased lifetime duration.

The blades 24 extend from the backing sheet 22 about 1.27 cm (1/2 inch) to about 10.16 cm (4 inches), and more preferably from about 2.54 cm (1 inch) to about 3.81 cm (1 and 1/2 inches). The adjacent blades 24, 26 define the interstices 32 therebetween. The interstices 32 receive the granular infill 34 selectively to a fill plane 39 between the upper surface of the backing sheet 22 and the extent of the tufts 24, preferably less than a height achieved by a distal extent of the blades 24 during ordinary installation on a ground surface, and more preferably between the upper surface of the backing sheet and an extent of the understory, and more preferably proximate but below the extent of the understory.

The color selection for the tufting yarns are green or brown, or variations of shades, to simulate grasses. The tufts may be tufted in combinations for closer simulation of the area to be covered, for example using a respective proportion of a first, second, or more, color yarns. The grass filaments formed by the tufted yarns preferably have an extended operational life of at least about 50 years to about 100 years. The yarns for the tufts of synthetic grass blades are preferably polyethylene or polypropylene, or other polymeric.

The alternating tufting of the geotextile 20 in accordance with the invention providing simulated grass blade tufts 24 and understory bristly tufts 26 defining nests 48 and protruding fibers that resist infill displacement from high shear loading from hydraulic ambient water flow or high winds dry-flow load on flow paths 62. Rather, the flow force is disrupted and slowed by the nests 48 occupying portions of interstices to create the serpentine meandering flow path over the porous backing sheet 22. The water may then enter into the soil below the geotextile 20, or when used in a covering system for closure purposes of a land site, flow over an impermeable geomembrane disposed below or attached to a bottom surface of the geotextile 20 to a water collection channel downslope. Further, the dense tufting of the geotextile resists dry flow forces that can result in movement of the geotextile (wrinkles) or of the infill (displacement), caused by wind infiltration, subsurface ground vibrations, site contents settlement and vibrations, or thermal expansions and contractions. Resistance to infill displacement retains evenly distributed infill and prevents thin coverage and accumulated coverage that may occur by infill displacement in response to shear forces (hydraulic or dry-flow winds).

### Cover System For Landfill and Waste Site Closure

The geotextile 20 readily installs over the ground surface with the bottom surface of the backing layer 22 in contact with the ground surface. The land site may include a soil overlay layer that covers waste materials such as in a landfill. The infill 34 provides additional mass for resisting wind uplift of the geotextile 20. The densely tufted geotextile 20 resists displacement of the infill 34 arising from hydraulic shear forces of water flow over the steep slopes (such as in a landfill), such that the granular loose infill 34 remains as distributed relatively evenly across the tufted geosynthetic 20 in the interstices 36 even without a securing material such as cementitious granules that cure in place. The water flows over and around the blades 26 and the nest 48 disrupt flows, and the water passes through the infill 34 and the backing sheet 22 into the ground underneath. Further, the nests 48 resists dry-flow forces (wind) that can result in movement of the geotextile (wrinkles) or of the infill (displacement), caused by wind infiltration, subsurface ground vibrations, site contents settlement and vibrations, or thermal expansions and contractions.

### Geotextile And Geomembrane Closure System

The tufted geotextile 20 readily installs alternatively with the impermeable geomembrane for a closure covering system 52 for landfills and waste sites. These sites typically have steep slopes from a toe to an apex, and may have slopes of up to about 45 degrees with elevational differences of 200 feet or more. The tufted geotextile 20 of the present invention readily installs for site covering or closure purposes such as without benches intermediate the toe and apex, although benches may be employed.

The geomembrane positions with a first surface overlying a land surface. The tufted geotextile 20 then overlies the geomembrane. The geomembrane provides a frictional interface to the ground and to the geotextile with a mechanical interface resistant to shear forces. The geomembrane may have opposing smooth surfaces, preferably textured surfaces for frictional engagements, and more preferably extending projections from one or both surfaces of the geomembrane, such as structural drainage features.

As noted above, the geomembrane in one embodiment may include a plurality of projections that extend from one or both opposing surfaces. In this embodiment, the projections pierce into, and mechanically engage with, the back surface of the backing sheet 22. This structure thus provides the cover system having increased shear resistance to displacement of the tufted geotextile 20 relative to the geomembrane while the nests 48 resist infill displacement arising from hydraulic or dry-flow shear forces particularly on steeply sloped sites. The penetration of the projections into the geotextile 20 form the mechanical connection between the geomembrane and the geotextile 20. The interface resistance to slippage is based upon the material strength of the geotextile and the projections in combination. The present invention provides high shear strength for a geotextile in a variety of applications including soil coverage and as a component of a closure system having the geomembrane and the geotextile to the resist slippage of the tufted geotextile relative to the geomembrane in response to shear loading on the cover system from hydraulic ambient water flow and dry-flow forces that can result in movement of the geotextile (wrinkles) or displacement of the infill.

The extending blades 26 and nests 48 shadow the interstices 32 of the geotextile 20 from the surface of the backing sheet 22 to a selected fill level, and may reach about the fill plane 39, and thus reduce exposure of the backing sheet 22 to UV and heat degradation.

The foregoing discloses an improved tufted geotextile 20 having nest 48 structures that resist infill displacement caused by shear forces of hydraulic flow or dry-flow on the infill (uniform distribution lost by carry away in flowing waters or wind to create thin or bare portions and overfill portions of the cover system requiring periodic maintenance) without the use of securing additives such as cement. The heavy high-strength geotextile backing sheet 22 preferably includes a UV resistant polymer and the nest tufting affords shading and cooperatively with the blades experiences reduced or non-moving infill to protect the geotextile from UV degradation for cover system longevity and utility over longer multiple-year weathering periods experienced in covering and closing land site. In the closure application, the geotextile 20 secures in a first embodiment with the frictional interface to the impermeable geomembrane or secures in a second embodiment with the mechanical engagement to the impermeable geomembrane.

A fire additive used in the yarns of the backing 22 provides a land surface covering resistant to fire.

The foregoing discloses a tufted geotextile for use with covering land surfaces. The tufted geotextile comprises at least one backing sheet tufted with first yarns for a plurality of first tufts that extend a first length from the backing sheet as simulated grass blades and formed in spaced-apart first lines of tufts and tufted of second yarns for a plurality of second tufts in spaced-apart second lines of the second tufts alternating with the first line of the first tufts, said first tufts and second tufts defining interstices therebetween for receiving an infill, said second tufts extend a second length from the backing, which second length is less than the first length, each second tuft having a plurality of discrete fibers that extend outwardly from the second tufts as an understory into the interstices for restricting hydraulic and dry-flow displacement of an infill received in the interstices between the adjacent alternating first tufts and second tufts.

It is thus seen that the foregoing describes a tufted geotextile with understory tufts and nests for shear resistance to hydraulic and dry-flow displacement of infill during use for ground covering purposes, as well as disclosing a method for tufting a geotextile with understory tufts and nests and a method of covering outdoor land sites for increased resistance to high shear hydraulic and dry-flow events with a tufted geotextile having understory tufts and nests. Although the tufted geotextile with understory tufts and nests has been illustrated and described in various embodiments and site applications, it should be understood that many modifications, additions, and deletions may be made without departure from the scope of the invention as set forth in the claims.

## Claims

1. A tufted geotextile (10) for use with covering and closing waste sites and land surfaces, comprising at least one backing sheet (22) tufted with continuous filament yarns to form a plurality of first tufts (24) that extend a first length (42) from the backing sheet (22) as simulated grass blades, said tufting of the continuous filament yarns formed in spaced-apart first lines of first tufts and tufted with elastic ply yarns for a plurality of second tufts (26) that extend a second length (52) from the backing sheet (22) in spaced-apart second lines of the second tufts, said second lines of the second tufts alternating with said first lines of the first tufts, said first tufts and second tufts defining interstices (32) therebetween for receiving an infill (34), said second length is less than the first length, each second tuft defining a nest (48) of a plurality of discrete fibers (46, 50) that extend outwardly from the second tufts as an understory into the interstices, each said nest (48) forming a restriction gap (51) between the nest and adjacent first tufts, said restriction gap narrower than an interstices gap between adjacent first tufts, for restricting hydraulic and dry-flow displacement of the infill (34) received in the interstices (32) between the adjacent alternating first tufts (24) and second tufts (26).

2. The tufted geotextile as recited in claim 1, further comprising a geomembrane (80) for underlying the backing sheet (22) for restricting inflow of ambient water into the covered ground.

3. The tufted geotextile as recited in claim 1, wherein the continuous filament yarn and ply yarn tuft on a spacing gauge in a range of about 65.6 tufts per meter [20 tufts per foot] to about 164.0 tufts per meter [50 tufts per foot] and lines of tufts spaced about 0.64 cm [1/4 inch] apart to 1.91 cm [¾ inch] apart.

4. The tufted geotextile as recited in claim 1, wherein the continuous filament yarn comprises a filament yarn made of one or more continuous strands.

5. The tufted geotextile as recited in claim 4, wherein the continuous filament yarn comprises a flat yarn.

6. The tufted geotextile as recited in claim 1, wherein the ply yarn comprises a plurality of staple fiber yarns twisted together.

7. The tufted geotextile as recited in claim 1, wherein the infill comprises a sand material.

8. A method for tufting a geotextile for an understory of nest-ended tufts in a tufted geotextile for use with covering and closing waste sites and land surfaces, comprising the steps of:
(a) tufting a backing sheet (22) with a first tuft motion (i) with a plurality of first yarns to define a plurality of respective in-tuft process first tufts in first spaced-apart relation for forming a line of in-tuft process first tufts, said first yarns each comprises a filament yarn made of one or more continuous strands, and (ii) with a plurality of second yarns to define a plurality of respective in-tuft process second tufts in second spaced-apart relation for forming a line of said in-tuft process second tufts, said line of said in-tuft process second tufts spaced from said line of said in-tuft process first tufts, said second yarns each comprises a ply yarn made of a plurality of strands of staple fiber yarns twisted together;
(b) cutting at a first length relative to the backing sheet (i) the in-tuft process first tufts to form a plurality of first tufts (24) and (ii) the in-tuft process second tufts to form a plurality of second tufts (26), said first tufts extending said first length to a respective distal end as simulated grass blades;
(c) said in-tuft process second tufts upon cutting retracting from said first length to a second length relative to the backing sheet to form a plurality of second tufts extending to a respective distal end as simulated grass blades;
(d) said respective distal ends of said second tufts forming nests (48) of the one or more strands of staple fiber yarns for defining an understory extent (52) below the distal extent (42) of said plurality of first tufts (24);
said plurality of first tufts and of said second tufts defining interstices (32) therebetween for receiving an infill (34);
whereby said nested second tufts (26) for restricting hydraulic and dry-flow displacement of the infill (34) received in the interstices (32) between the adjacent alternating first tufts and second tufts.

9. The method for tufting a geotextile as recited in claim 8, further comprising the step of attaching a geomembrane (80) to a bottom surface of the backing sheet (22) for restricting inflow of ambient water into the ground covered by the tufted geotextile.

10. The method for tufting a geotextile as recited in claim 8, wherein the first yarns and the second yarns tuft on a spacing gauge in a range of about 65.6 tufts per meter [20 tufts per foot] to about 164.0 tufts per meter [50 tufts per foot].

11. The method for tufting a geotextile as recited in claim 8, wherein the lines of first tufts and the lines of second tufts are spaced about 0.64 cm [1/4 inch] apart to 1.91 cm [¾ inch] apart.

12. The method for tufting a geotextile as recited in claim 8, wherein the step of forming said nests of the one or more strands of staple fiber yarns comprises the distal end fraying into discrete fibers that splay laterally into the interstices.

13. The method for tufting a geotextile as recited in claim 8, wherein said second yarns are held during formation of the in-tuft process second tufts for elongating said second yarns prior to cutting step (b).

14. A method of covering outdoor land sites for increased resistance to high shear hydraulic and dry-flow events, comprising the steps of:
(a) overlying a surface (86) with a tufted geotextile (10) comprising a backing sheet (22) tufted with alternating rows of a plurality of spaced-apart first tufts (24) tufted with a continuous filament yarn and of a plurality of spaced-apart second tufts (26) tufted with a elastic ply yarn, said first and second tufts defining interstices (32) therebetween, said first tufts (24) extending a first length (42) from the backing sheet (22) as simulated blades of grass and said second tufts 926) extending a second length (52) to a respective distal extent less than the first length from the backing sheet (22), said respective distal extent of each second tuft (26) defining a nest (48) of splayed discrete fibers that extend into the interstices, each said nest (48) forming a restriction gap (51) between the nest and adjacent first tufts, said restriction gap narrower than an interstices gap between adjacent first tufts,; and
(b) applying an infill (34) into the interstices (32) between the backing sheet (22) and proximate the distal extent (52) of the second tufts (26), whereby the restriction gap (51) of each of the nests (48) of splayed discrete fibers provides a blocking impediment to displacement of the infill during high shear loading from flow of ambient water or flow of ambient wind over the tufted geotextile.

15. The method of covering outdoor land sites as recited in claim 14, wherein the continuous filament yarn comprises a filament yarn and said ply yarn comprises a plurality of strands of staple fiber yarns twisted together.

## Patentansprüche

1. Getuftete Geotextilie (10) zur Verwendung beim Abdecken und Verschließen von Mülldeponien und Geländeoberflächen, umfassend mindestens eine Trägerbahn (22), die mit Endlosfilamentgarnen getuftet ist, um eine Mehrzahl erster Büschel (24) zu bilden, die sich als simulierte Grashalme über eine erste Länge (42) von der Trägerbahn (22) erstrecken, wobei das genannte Tufting der Endlosfilamentgarne in voneinander beabstandeten ersten Reihen erster Büschel gebildet ist und mit elastischen Zwirnen zu einer Mehrzahl zweiter Büschel (26) getuftet ist, die sich in voneinander beabstandeten zweiten Reihen der zweiten Büschel über eine zweite Länge (52) von der Trägerbahn (22) erstrecken, wobei sich die genannten zweiten Reihen der zweiten Büschel mit den genannten ersten Reihen der ersten Büschel abwechseln, wobei die genannten ersten Büschel und die genannten zweiten Büschel dazwischen Zwischenräume (32) zur Aufnahme eines Füllmaterials (34) bilden, wobei die genannte zweite Länge kleiner ist als die erste Länge, wobei jedes zweite Büschel ein Nest (48) aus einer Mehrzahl einzelner Fasern (46, 50) definiert, die sich von den zweiten Büscheln als Unterschicht nach außen in die Zwischenräume erstrecken, wobei jedes genannte Nest (48) eine Einschränkungslücke (51) zwischen dem Nest und den benachbarten ersten Büscheln bildet, wobei die genannte Einschränkungslücke schmaler ist als eine Zwischenraumlücke zwischen benachbarten ersten Büscheln, um die hydraulische und Trockenflussverlagerung des in den Zwischenräumen (32) zwischen den benachbarten, sich abwechselnden ersten Büscheln (24) und zweiten Büscheln (26) aufgenommenen Füllmaterials (34) einzuschränken.

2. Getuftete Textilie nach Anspruch 1, die ferner eine Geomembran (80) als Unterlage für die Trägerbahn (22) zum Einschränken des Einfließens von umgebendem Wasser in das abgedeckte Gelände umfasst.

3. Getuftete Textilie nach Anspruch 1, wobei das Endlosfilamentgarn und der Zwirn auf einer Abstandslehre in einem Bereich von etwa 65,6 Büschel pro Meter [20 Büschel pro Fuß] bis etwa 164,0 Büschel pro Meter [50 Büschel pro Fuß] und mit einem Abstand zwischen den Büschelreihen von etwa 0,64 cm [1/4 Zoll] bis 1,91 cm [3/4 Zoll] getuftet sind.

4. Getuftete Textilie nach Anspruch 1, wobei das Endlosfilamentgarn ein aus einem oder mehreren Endlosfäden hergestelltes Filamentgarn umfasst.

5. Getuftete Textilie nach Anspruch 4, wobei das Endlosfilamentgarn ein flaches Garn umfasst.

6. Getuftete Textilie nach Anspruch 1, wobei der Zwirn eine Mehrzahl miteinander verzwirnter Spinnfasergarne umfasst.

7. Getuftete Textilie nach Anspruch 1, wobei das Füllmaterial ein Sandmaterial umfasst.

8. Verfahren für das Tuften einer Geotextilie für eine Unterschicht aus Büscheln mit zu Nestern geformten Enden in einer getufteten Geotextilie zur Verwendung beim Abdecken und Verschließen von Mülldeponien und Geländeoberflächen, das die folgenden Schritte umfasst:
(a) Tuften einer Trägerbahn (22) mit einer ersten Tuftbewegung (i) mit einer Mehrzahl erster Garne, um eine Mehrzahl von jeweiligen ersten Büscheln des In-Tuft-Prozesses in erster voneinander beabstandeter Beziehung zum Bilden einer Reihe von ersten Büscheln des In-Tuft-Prozesses zu definieren, wobei die genannten ersten Garne jeweils ein Filamentgarn umfassen, das aus einem oder mehreren Endlosfäden hergestellt ist, und (ii) mit einer Mehrzahl zweiter Garnen, um eine Mehrzahl von jeweiligen zweiten Büscheln des In-Tuft-Prozesses in zweiter voneinander beabstandeter Beziehung zum Bilden einer Reihe der genannten zweiten Büschel des In-Tuft-Prozesses zu definieren, wobei die genannte Reihe der genannten zweiten Büschel des In-Tuft-Prozesses von der genannten Reihe der genannten ersten Büschel des In-Tuft-Prozesses beabstandet ist, wobei die genannten zweiten Garne jeweils einen Zwirn umfassen, der aus einer Mehrzahl von miteinander verzwirnten Fäden aus Spinnfasergarn hergestellt ist;
(b) Schneiden, in einer ersten Länge relativ zur Trägerbahn, (i) der ersten Büschel des In-Tuft-Prozesses zum Bilden einer Mehrzahl erster Büschel (24) und (ii) der zweiten Büschel des In-Tuft-Prozesses zum Bilden einer Mehrzahl zweiter Büschel (26), wobei die genannten ersten Büschel sich als simulierte Grashalme über die genannte erste Länge zu einem jeweiligen distalen Ende erstrecken;
(c) Zurückziehen der genannten zweiten Büschel des In-Tuft-Prozesses beim Schneiden von der genannten ersten Länge auf eine zweite Länge relativ zur Trägerbahn zum Bilden einer Mehrzahl zweiter Büschel, die sich als simulierte Grashalme zu einem jeweiligen distalen Ende erstrecken;
(d) an den genannten jeweiligen distalen Enden der genannten zweiten Büschel Bilden von Nestern (48) aus dem einen oder den mehreren Fäden aus Spinnfasergarnen zum Definieren einer Unterschichterstreckung (52) unter der distalen Erstreckung (42) der genannten Mehrzahl von ersten Büscheln (24);
wobei die genannte Mehrzahl erster Büschel und der genannten zweiten Büschel dazwischen Zwischenräume (32) zur Aufnahme eines Füllmaterials (34) bilden;
so dass die genannten zu Nestern geformten zweiten Büschel (26) dazu dienen, die hydraulische und Trockenflussverlagerung des in den Zwischenräumen (32) zwischen den benachbarten, sich abwechselnden ersten Büscheln und zweiten Büscheln aufgenommenen Füllmaterials (34) einzuschränken.

9. Verfahren für das Tuften einer Geotextilie nach Anspruch 8, ferner umfassend den Schritt des Anbringens einer Geomembran (80) an einer Unterseite der Trägerbahn (22) zum Einschränken des Einfließens von Umgebungswasser in das von der getufteten Geotextilie abgedeckte Gelände.

10. Verfahren für das Tuften einer Geotextilie nach Anspruch 8, wobei die ersten Garne und die zweiten Garne auf einer Abstandslehre in einem Bereich von etwa 65,6 Büschel pro Meter [20 Büschel pro Fuß] bis etwa 164,0 Büschel pro Meter [50 Büschel pro Fuß] getuftet werden.

11. Verfahren für das Tuften einer Geotextilie nach Anspruch 8, wobei die Reihen erster Büschel und die Reihen zweiter Büschel etwa 0,64 cm [1/4 Zoll] bis 1,91 cm [34 Zoll] beabstandet werden.

12. Verfahren für das Tuften einer Geotextilie nach Anspruch 8, wobei der Schritt des Bildens der genannten Nester aus dem einen oder den mehreren Fäden aus Spinnfasergarnen das Zerfasern des distalen Endes in einzelne Fasern umfasst, die sich seitlich in die Zwischenräume abspreizen.

13. Verfahren für das Tuften einer Geotextilie nach Anspruch 8, wobei die genannten zweiten Garne während des Bildens der zweiten Büschel des In-Tuft-Prozesses zur Verlängerung der genannten zweiten Garne vor dem Schneidschritt (b) festgehalten werden.

14. Verfahren zum Abdecken von Freiflächen für eine erhöhte Beständigkeit gegenüber hydraulischen und Trockenabflussereignissen mit hoher Scherung, umfassend die folgenden Schritte:
(a) Überlagern einer Oberfläche (86) mit einem getufteten Geotextil (10), das eine Trägerbahn (22) umfasst, die mit abwechselnden Reihen einer Mehrzahl voneinander beabstandeter erster Büschel, die mit einem Endlosfilamentgarn getuftet sind, und einer Mehrzahl voneinander beabstandeter zweiter Büschel (26), die mit einem elastischen Zwirn getuftet sind, getuftet ist, wobei die genannten ersten und zweiten Büschel dazwischen Zwischenräume (32) definieren, wobei die genannten ersten Tufts (24) sich als simulierte Grashalme über eine erste Länge (42) von der Trägerbahn (22) erstrecken und die genannten zweiten Tufts (926) sich über eine zweite Länge (52) auf eine jeweilige distale Erstreckung erstrecken, die kleiner als die erste Länge von der Trägerbahn (22) ist, wobei die genannte jeweilige distale Erstreckung jedes zweiten Büschels (26) ein Nest (48) aus abgespreizten einzelnen Fasern definiert, die sich in die Zwischenräume erstrecken, wobei jedes genannte Nest (48) eine Einschränkungslücke (51) zwischen dem Nest und den benachbarten ersten Büscheln bildet, wobei die genannte Einschränkungslücke schmaler ist als eine Zwischenraumlücke zwischen benachbarten ersten Büscheln; und
(b) Einbringen einer Füllung (34) in die Zwischenräume (32) zwischen der Trägerbahn (22) und in der Nähe der distalen Erstreckung (52) der zweiten Büschel (26), so dass die Einschränkungslücke (51) jedes der Nester (48) aus abgespreizten einzelnen Fasern ein blockierendes Hindernis für eine Verlagerung des Füllmaterials während hoher Scherbeanspruchung durch die Strömung von Umgebungswasser oder die Strömung von Umgebungswind über das getuftete Geotextil bildet.

15. Verfahren zum Abdecken von Freiflächen nach Anspruch 14, wobei das Endlosfilamentgarn ein Filamentgarn umfasst und der genannte Zwirn eine Mehrzahl miteinander verzwirnter Fäden aus Spinnfasergarnen umfasst.

## Revendications

1. Géotextile touffeté (10) pour utilisation avec le recouvrement et la fermeture de sites de décharge et de surfaces de terrain, comprenant au moins une feuille de support (22) touffetée avec des fils filamenteux continus pour former une pluralité de premières touffes (24) qui s'étendent sur une première longueur (42) de la feuille de support (22) comme des brins d'herbe simulés, ledit touffetage des fils filamenteux continus formés dans des premières lignes espacées des premières touffes et touffetés avec des fils élastiques à plusieurs brins pour une pluralité de deuxièmes touffes (26) qui s'étendent sur une deuxième longueur (52) de la feuille de support (22) dans des deuxièmes lignes espacées des deuxièmes touffes, lesdites deuxièmes lignes des deuxièmes touffes alternant avec lesdites premières lignes des premières touffes, lesdites premières touffes et lesdites deuxièmes touffes définissant des interstices (32) entre elles pour recevoir un remplissage (34), ladite deuxième longueur est moindre que la première longueur, chaque deuxième touffe définissant un nid (48) d'une pluralité de fibres discrètes (46, 50) qui s'étendent vers l'extérieur des deuxièmes touffes comme une strate inférieure dans les interstices, chaque dit nid (48) formant un écart de restriction (51) entre le nid et les premières touffes adjacentes, ledit écart de restriction étant plus étroit qu'un écart des interstices entre des premières touffes adjacentes, afin de restreindre le déplacement hydraulique et par écoulement à sec du remplissage (34) reçu dans les interstices (32) entre les premières touffes alternantes adjacentes (24) et les deuxièmes touffes (26).

2. Géotextile touffeté selon la revendication 1, comprenant en outre une géomembrane (80) pour sous-tendre la feuille de support (22) afin de restreindre l'afflux d'eau ambiante dans le sol recouvert.

3. Géotextile touffeté selon la revendication 1, dans lequel la touffe de fil filamenteux continu et de fil à plusieurs brins sur une jauge d'espacement est dans une plage d'environ 65,6 touffes par mètre [20 touffes par pied] à environ 164,0 touffes par mètre [50 touffes par pied] et les lignes de touffes sont espacées d'environ 0,64 cm [1/4 pouce] à environ 1,91 cm [3/4 pouce].

4. Géotextile touffeté selon la revendication 1, dans lequel le fil filamenteux continu comprend un fil filamenteux fait d'un ou de plusieurs brins continus.

5. Géotextile touffeté selon la revendication 4, dans lequel le fil filamenteux continu comprend un fil plat.

6. Géotextile touffeté selon la revendication 1, dans lequel le fil à plusieurs brins comprend une pluralité de fils de fibres discontinues torsadées ensemble.

7. Géotextile touffeté selon la revendication 1, dans lequel le remplissage comprend un matériau de sable.

8. Procédé de touffetage d'un géotextile pour une strate inférieure de touffes terminées en nid dans un géotextile touffeté pour utilisation avec le recouvrement et la fermeture de sites de décharge et de surfaces de terrain, comprenant les étapes consistant à :
(a) touffeter une feuille de support (22) avec un mouvement de touffetage (i) avec une pluralité de premiers fils afin de définir une pluralité de premières touffes respectives de procédé de touffetage selon une première relation espacée pour former une ligne de premières touffes de procédé de touffetage, lesdits premiers fils comprennent chacun un fil filamenteux fait d'un ou de plusieurs fils continus, et (ii) avec une pluralité de deuxièmes fils pour définir une pluralité de deuxièmes touffes respectives de procédé de touffetage selon une deuxième relation espacée afin de former une ligne desdites deuxièmes touffes de procédé de touffetage, ladite ligne desdites deuxièmes touffes de procédé de touffetage étant espacée de ladite ligne desdites premières touffes de procédé de touffetage, lesdits deuxièmes fils comprennent chacun un fil à plusieurs brins fait d'une pluralité de brins de fils de fibres discontinues torsadées ensemble ;
(b) couper à une première longueur par rapport à la feuille de support (i) les premières touffes de procédé de touffetage pour former une pluralité de premières touffes (24) et (ii) les deuxièmes touffes de procédé de touffetage pour former une pluralité de deuxièmes touffes (26), lesdites premières touffes s'étendant sur ladite première longueur jusqu'à une extrémité distale respective comme des brins d'herbe simulés ;
(c) lors de la coupe les deuxièmes touffes de procédé de touffetage se rétractent de ladite première longueur à une deuxième longueur par rapport à la feuille de support afin de former une pluralité de deuxièmes touffes s'étendant jusqu'à une extrémité distale respective comme des brins d'herbe simulés ;
(d) lesdites extrémités distales respectives desdites deuxièmes touffes formant des nids (48) d'un ou de plusieurs brins de fils de fibres discontinues afin de définir une étendue de strate inférieure (52) en dessous de l'étendue distale (42) de ladite pluralité de premières touffes (24) ;
ladite pluralité de premières touffes et desdites deuxièmes touffes définissant des interstices (32) entre elles pour recevoir un remplissage (34) ;
en vertu de quoi lesdites deuxièmes touffes imbriquées (26) restreignent le déplacement hydraulique et par écoulement à sec du remplissage (34) reçu dans les interstices (32) entre les premières touffes alternantes adjacentes et les deuxièmes touffes.

9. Procédé de touffetage d'un géotextile selon la revendication 8, comprenant en outre l'étape consistant à attacher une géomembrane (80) à une surface inférieure de la feuille de support (22) pour restreindre l'afflux d'eau ambiante dans le sol recouvert par le géotextile touffeté.

10. Procédé de touffetage d'un géotextile selon la revendication 8, dans lequel la touffe de premiers fils et de deuxièmes fils sur une jauge d'espacement est dans une plage d'environ 65,6 touffes par mètre [20 touffes par pied] à environ 164,0 touffes par mètre [50 touffes par pied].

11. Procédé de touffetage d'un géotextile selon la revendication 8, dans lequel les lignes de premières touffes et les lignes de deuxièmes touffes sont espacées d'environ 0,64 cm [1/4 pouce] à environ 1,91 cm [3/4 pouce].

12. Procédé de touffetage d'un géotextile selon la revendication 8, dans lequel l'étape de formation desdits nids d'un ou de plusieurs brins de fils de fibres discontinues comprend l'effilochage des extrémités distales en des fibres discrètes qui s'évasent latéralement dans les interstices.

13. Procédé de touffetage d'un géotextile selon la revendication 8, dans lequel lesdits deuxièmes fils sont tenus pendant la formation des deuxièmes touffes de procédé de touffetage afin d'allonger lesdits deuxièmes fils avant l'étape de coupe (b).

14. Procédé de recouvrement de sites de terrain extérieur afin d'en augmenter la résistance à des événements hydrauliques ou d'écoulement à sec, comprenant les étapes consistant à :
(a) recouvrir une surface (86) avec un géotextile touffeté (10) comprenant une feuille de support (22) touffetée avec des rangées alternantes d'une pluralité de premières touffes espacées (24) touffetées avec un fil filamenteux continu et d'une pluralité de deuxièmes touffes espacées (26) touffetées avec un fil élastique à plusieurs brins, lesdites premières et deuxièmes touffes définissant des interstices (32) entre elles, lesdites premières touffes (24) s'étendant sur une première longueur (42) de la feuille de support (22) comme des brins d'herbe simulés et lesdites deuxièmes touffes (26) s'étendant sur une deuxième longueur (52) jusqu'à une étendue distale respective moindre que la première longueur, de la feuille de support (22), ladite étendue distale respective de chaque deuxième touffe (26) définissant un nid (48) de fibres discrètes évasées qui s'étendent dans les interstices, chaque dit nid (48) formant un écart de restriction (51) entre le nid et les premières touffes adjacentes, ledit écart de restriction étant plus étroit qu'un écart des interstices entre des premières touffes adjacentes ; et
(b) appliquer un remplissage (34) dans les interstices (32) entre la feuille de support (22) et proche de l'étendue distale (52) des deuxièmes touffes (26), en vertu de quoi l'écart de restriction (51) de chacun des nids (48) de fibres discrètes évasées fournit une obstruction au déplacement du remplissage pendant une charge de cisaillement élevé provenant de l'écoulement d'eau ambiante ou du flux de vent ambiant sur le géotextile touffeté.

15. Procédé de recouvrement de sites de terrain extérieur selon la revendication 14, dans lequel le fil filamenteux continu comprend un fil filamenteux et ledit fil à plusieurs brins comprend une pluralité de brins de fils de fibres discontinues torsadées ensemble.
